(19) Europäisches Patentamt / European Patent Office / Office européen des brevets

(11) **EP 2 435 151 B1**

(12) **EUROPÄISCHE PATENTSCHRIFT**

(45) Veröffentlichungstag und Bekanntmachung des Hinweises auf die Patenterteilung:
**25.05.2016 Patentblatt 2016/21**

(21) Anmeldenummer: **10722007.1**

(22) Anmeldetag: **26.05.2010**

(51) Int Cl.:
**B01D 3/06** *(2006.01)*    **B01D 3/10** *(2006.01)*

(86) Internationale Anmeldenummer:
**PCT/EP2010/003206**

(87) Internationale Veröffentlichungsnummer:
**WO 2010/139413 (09.12.2010 Gazette 2010/49)**

(54) **VORRICHTUNG UND VERFAHREN ZUM ENTGASEN VON LÖSUNGSMITTELHALTIGEN POLYCARBONATLÖSUNGEN**

Device and method for removing gas from polycarbonate solutions containing solution

Dispositif et procédé de dégazage de solutions de polycarbonate contenant des solvants

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **30.05.2009 EP 09007269**

(43) Veröffentlichungstag der Anmeldung:
**04.04.2012 Patentblatt 2012/14**

(73) Patentinhaber: **Covestro Deutschland AG**
**51373 Leverkusen (DE)**

(72) Erfinder:
• **KÖNIG, Thomas**
**51375 Leverkusen (DE)**
• **KOHLGRÜBER, Klemens**
**51515 Kürten (DE)**
• **VANDEN EYNDE, Johan**
**B-9052 Zwijnaarde (BE)**
• **VAES, Johan**
**B-2920 Kalmthout (BE)**
• **DE VOS, Stefaan**
**Rayong**
**21150 (TH)**

(74) Vertreter: **Levpat**
**c/o Covestro AG**
**Alfred-Nobel-Straße 10**
**40789 Monheim am Rhein (DE)**

(56) Entgegenhaltungen:
EP-A- 0 359 432     DE-A1- 10 016 894
DE-A1- 10 333 577   GB-A- 1 330 890
US-A- 2 964 513      US-A- 3 450 183
US-A- 4 906 329      US-A- 5 283 021
US-A1- 2001 056 176  US-A1- 2005 234 219

**Beschreibung**

Die Erfindung betrifft eine Vorrichtung und ein Verfahren zum Entgasen von lösungsmittelhaltigen Polycarbonatlösungen. Durch Anwendung der erfindungsgemäßen Vorrichtung werden Polycarbonate mit niedrigen Restwerte an flüchtiger Bestandteile aus lösungsmittelhaltigen Polymerschmelzen hergestellt, die verbesserte optische Eigenschaften, insbesondere Yellowness Index (YI), mit Hilfe einer Apparate-Kombination aus einem Flashverdampfer und einem Entgasungsextruder.

Im bekannten Grenzflächenverfahren zur Herstellung von Polycarbonaten werden Lösungsmittel wie aromatische Chlorkohlenwasserstoffe, insbesondere Dichlormethan eingesetzt, deren Restgehalte im Endprodukt unerwünscht sind, da sie im Polycarbonat stören. Um diese flüchtigen Bestandteile zu entfernen muss der Ausdampfextruder nach den aus dem Stand der Technik bekannten Verfahren bei höheren Temperaturen betrieben werden, wodurch thermische Schädigungen entstehen, was den Nachteil verschlechterter optischer Eigenschaften aufweist.

Eine effiziente Aufkonzentrierung der Polycarbonatlösung und Ausdampfung der Restgehalte an Lösungsmittel bei niedrigen Temperaturen ist deswegen von höchster Bedeutung um Polycarbonate mit verbesserten optischen Eigenschaften zu erlangen.

Das Verfahren zur Polycarbonatsynthese nach dem Phasengrenzflächenverfahren ist mannigfaltig in der Literatur beschrieben, so unter anderem bei Schnell, "Chemistry and Physics of Polycarbonates", Polymer Reviews, Volume 9, Interscience Publishers, New York, London, Sydney 1964, Seite 33-70.

Bei dem Phasengrenzflächenverfahren erfolgt die Phosgenierung eines in wässrig-alkalischer Lösung (oder Suspension) vorgelegten Dinatriumsalzes eines Bisphenols (oder eines Gemisches verschiedener Bisphenole) in Gegenwart eines inerten organischen Lösungsmittels oder Lösungsmittelgemisches, welches eine zweite Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert. Die organische Phase wird schließlich abgetrennt und in einem mehrstufigen Verfahren gewaschen, um Reste von Natrium und Katalysator zu entfernen. Typischerweise enthält die organische Phase nach der Reaktion 10-20 Gew.-% Polycarbonat.

Das Polycarbonat muss anschließend aus der organischen Phase isoliert werden. Die gängigen Verfahren zur Konzentrierung der Polycarbonatlösung und zur Isolierung des Polycarbonats sind in der Patentliteratur und in Lehrbüchern beschrieben und dem Fachmann geläufig. Die Isolierung des Polycarbonats aus der Lösung wird bevorzugt durch Verdampfen des Lösungsmittels mittels Temperatur oder Vakuum durchgeführt.

Dieses Verfahren erfordert, um nach dem Verdampfen des Lösungsmittels direkt die Schmelzephase zu erhalten, den Einsatz eines hoch siedenden (>100°C) Lösungsmittels, beispielsweise Chlorbenzol. Um die Löslichkeit des Polymers im Lösungsmittel während der Reaktion zu verbessern, wird auch ein Gemisch aus einem oder mehreren hochsiedenden Lösungsmitteln und dem niedrig siedenden Dichlormethan eingesetzt. Typischerweise ist das Gewichtsverhältnis von Dichlormethan zu dem hochsiedenden Lösungsmittel etwa 1:1.

Eine weitere Möglichkeit liegt in der Eindüsung eines erhitzten Gases, insbesondere Wasserdampf, zum Austreiben der flüchtigen Bestandteile. Dabei wird die Polycarbonatlösung mit dem Trägergas versprüht, und Polycarbonat fällt als Feststoff an, insbesondere als wasserfeuchte Suspension. Andere Isolierungsmethoden sind die Kristallisation und Fällung sowie das Ausheizen der Reste des Lösungsmittels in der festen Phase. Letzteres Verfahren erfordert den Einsatz von Dichlormethan als Lösungsmittel, wobei Restgehalte an flüchtigem Lösungsmittel von etwa 2 ppm Dichlormethan erreicht werden können.

Restgehalte an Dichlormethan stören allerdings im Polycarbonat besonders, da Dichlormethan bekanntermaßen beim Verarbeitungsprozess mit Restfeuchte zusammen Salzsäure abspaltet und so zu Verfärbungen des Polycarbonats und zu Korrosion an Werkzeugen führen kann. Dichlormethan kann bei erhöhten Temperaturen auch im Aufarbeitungsprozess zu Qualitätseinbußen wie Verfärbungen und Gelbildung führen.

Bei den bekannten Verfahren zur Verdampfung, oder auch Flashverdampfung, werden Polycarbonatlösungen wiederholt unter leichtem Überdruck auf Temperaturen oberhalb des Siedepunktes erhitzt und diese überhitzten Lösungen anschließend in einen Behälter entspannt, wobei in dem Behälter ein niedrigerer Druck herrscht, als dem Dampfdruck in der Lösung entspricht. Die Wiederholung des Verfahrens ist im Allgemeinen günstig, da die Konzentration an Polycarbonat in der Lösung nach der Reaktion relativ niedrig ist und durch die Wiederholung des Verfahrens eine starke Überhitzung vermieden werden kann. Gängige Verfahren für die apparative Eindampfung von Polycarbonatlösungen sind dem Fachmann geläufig. Beispielsweise kann die überhitzte Lösung in ein beheiztes Wendelrohr entspannt werden, welches in einen Abscheider mündet.

Oberhalb einer bestimmten Konzentration an Polycarbonat (etwa 60 Gew.-%) wird die Eindampfung durch Flashverdampfung durch die hohen Viskositäten erschwert. Die Eindampfung bis zu etwa 60% wird im Weiteren als Voreindampfung bezeichnet. Im Allgemeinen ist es günstig, das restliche Lösungsmittel mit anderen Verfahren, Apparaten und Maschinen zu entfernen. Dies können z.B. Ausdampfextruder oder vertikale Rohrverdampfer sein. Als letzte Stufe können auch Strang- oder Schaumverdampfer eingesetzt werden, um besonders niedrige Restgehalte zu erreichen.

Bei dem Eindampfen von Polycarbonat werden nach dem Stand der Technik meist zu hohe Apparate-Temperaturen und zu lange Verweilzeiten der Schmelze in den Apparaten angewendet, bei denen zwar eine hinreichende Restentgasung der Polycarbonatschmelze von den flüchtigen Bestandteilen erfolgt, allerdings eine Schädigung des so hergestellten Polycarbonats eintritt. Diese Produktschädigungen sind meist eine direkte Folge von zu hoher Temperatur-Belastung bei zu langer Verweilzeit der Polymerschmelze in den Entgasungsapparaten. Dabei treten Nebenreaktionen am Polycarbonat auf, die eine Verschlechterung der optischen Eigenschaften bewirken, insbesondere die Bildung von Fehlstrukturen, die in den aus solchem Polycarbonat hergestellten Formkörpem meist erst im UV-Licht sichtbar werden. Beispiele für solche Fehlstrukturen sind feinste Partikel und Gelkörper. Bei der Verarbeitung von Polycarbonat zu optischen Datenträgern, wie z.B. CDs oder DVDs, bewirken solche Fehlstrukturen im Endprodukt eine erhebliche Qualitätseinbuße, die nicht mehr tolerabel ist und vermieden werden muss.

Aufkonzentrierungen von Chlorbenzol-haltigen Polycarbonatlösungen sind in EP-A 1 265 944 und EP-A1 113 848 beschrieben, deren Beispiele die Herstellung von 65 Gew-%igen Polycarbonatlösungen beschreiben. Derartige Polycarbonatlösungen können zur Restentgasung des Polycarbonats, im Gegensatz zu den dort beschriebenen nachfolgenden Verfahrensschritten, auch in Ausdampfextrudem weiter eingedampft werden.

Ausdampf-oder Entgasungsextruder sind dem Fachmann im Prinzip bekannt und beispielsweise in [1] beschrieben. Kennzeichnend für Entgasungextruder sind die sogenannten Entgasungsdome oder Entgasungsöffnungen. Dies sind Gehäuse mit Öffnungen, durch die die enstehenden Brüden entweichen können. Verschiedene Entgasungsdome können bekanntlich bei verschiedenen Drücken betrieben werden, wenn zwischen den Entasungsdömen das Produkt abgestaut wird, so dass es eine Abdichtung zwischen den verschiedenen Drücken bildet.

Solche Restentgasungen von Polycarbonatlösungen mit Hilfe von Ausdampfextrudem werden in DE 29 08 352 und EP 1 165 302 beschrieben. In diesen beiden Extruder-Verfahren wird am Extrudereintritt eine sogenannte Rückwärtsentgasung beschrieben. Dabei wird eine gegebenenfalls vorgeheizte Polymerlösung in einen Zweischneckenextruder eingebracht und schäumt dort auf. Die Gase werden dann durch die Gänge des Zweischneckenextruders rückwärts zu einem Entgasungsdom abgeführt. Allgemein ist eine derartige Rückwärtsentgasung Stand der Technik und z.B. in dem Lehrbuch "Der gleichläufige Doppelschneckenextruder", Klemens Kohlgrüber, Carl Hanser Verlag, ISBN 978-3-446-41252-1, auf den Seiten 193-195 beschrieben. Ein Nachteil der Rückwärtsentgasung ist eine Limitierung in der Menge an abgedampftem Lösungsmittel, weil die Schneckenkanäle relativ eng sind und dadurch hohe Gasgeschwindigkeiten erreicht werden, die zu Mitriss von Produkt in den rückwärts gelegenen Entgasungsdom führen kann. So muss ein relativ hoher Anteil an Restlösungsmittel in den weiteren Stufen des Extruders ausgedampft werden, wenn 65- bis 75 Gew-%ige Polycarbonatlösungen in diese Apparate eingeführt werden und bis auf wenige ppm bezogen auf die gesamte Polycarbonatmasse Restlösungsmittelgehalte im Polycarbonat eingedampft werden sollen. Dabei können thermische Schädigungen des Polycarbonats auftreten, wie z.B. Vergilbungen, Bildung von unlöslichen Bestandteilen, Stippen, Spaltung der Polymerketten, Bildung von Restmonomeren und anderen niedermolekulaten Bestandteilen etc. Auch ist nachteilhaft, wenn direkt in einen Extruder eine Polycarbonatlösung mit Restgehalten an Lösungsmittel, wie Dichlormethan, eingespeist wird, da die dem Fachmann wohl bekannte Überhitzung der Lösung an den Kämmen der Schnecke in Gegenwart von beispielsweise Dichlormethan zu lokaler Produktschädigung und damit zu Verfärbung des Gesamtproduktes führt.

Weiterhin offenbart EP-A 027 700 die Kombination eines Flash-Verdampfers mit einem Ausdampfextruder zur Aufkonzentrierung der Lösungen von Olefinpolymerisaten, wobei vor der Flash-Stufe Wasserdampf als Schleppmittel in den Polymerschmelzestrom eingedüst wird. Im Fall von Polycarbonatschmelzen kann Wasser bei erhöhter Temperatur zu Polymerabbau durch Hydrolyse führen. Daher ist ein solches Verfahren für die Restentgasung von Polycarbonatschmelzen nicht empfehlenswert. Weiterhin wird dort beschrieben, dass das Produkt in dem Entgasungsbehälter im Boden der Apparatur "eingesammelt" wird, das in Kontakt mit dem Boden des Entgasungsbehälters dem Extruder zugeführt wird, was zu erhöhten Verweilzeiten des Polymers und damit zu thermischer Schädigung führt.

JP 05017516 beschreibt die Verwendung eines direkt auf dem Ausdampfextruder positionierten Rohrverdampfers zur Restentgasung von Polymerlösungen. Der Nachteil der hier beschriebenen Verfahrensführung besteht darin, dass die im Rohrverdampfer entstehenden Brüden nicht dort abgeführt werden, sondern über die Entgasungsöffnungen des Ausdampfextruders, u.a. auch über eine Rückwärtsentgasung, ausgetragen werden. Damit leidet dieses Verfahren unter den gleichen Limitierungen durch hohe Gasgeschwindigkeiten in den engen Schneckenkanälen wie die Verfahren zur reinen Rückwärtsentgasung. Dadurch resultieren erhöhte Scherkräfte im Extruder, was unvermeidlich schädigende Temperaturerhöhungen zu Folge hat.

EP-A 1 510 530 schildert ein Verfahren, bei dem eine in einem Wärmetauscher unter einer Druckhaltung überhitzte Polymerlösung einem Ausdampfextruder zugeführt wird. Die entstehenden Gase werden dann durch Vorwärts- und Rückwärtsentgasung aus dem Extruder entfernt. Damit leidet dieses Verfahren unter den gleichen Limitierungen durch hohe Gasgeschwindigkeiten in den engen Schneckenkanälen wie die Verfahren zur Rückwärtsentgasung sowie an der lokalen Überhitzung an den Schneckenkämmen in Gegenwart von Dichlormethan. Wie an den Beispielen 60 bis 65 in EP-A 1 510 530 für Polycarbonatlösungen dargestellt wurde, liegen die Restlösungsmittelgehalte z.T. deutlich über 1000 ppm, was für die meisten Anwendungen nicht tolerabel ist.

In EP 1 113 848 B1 wurde für die letzte Stufe der Eindampfung eine Kombination aus Rohr- und Strangverdampfer beschrieben. Dabei wird die Polymerlösung zunächst in einem vertikalen Rohrbündelwärmetauscher mit nachgeschaltetem Abscheider, ausgehend von einer Lösung mit 60 bis 75 Gew.-% Polycarbonat, auf 98 bis 99 Gew.-% aufkonzentriert und anschließend in einem Strangverdampfer auf Restgehalte von 5 bis 500 ppm Chlorbenzol aufkonzentriert wird. Bei der Verwendung eines Strangverdampfers wird die Polymerschmelze in einem Abscheider unter Vakuum und erhöhter Temperatur zu feinen Strängen geformt und so vom Lösungsmittel befreit. Der Nachteil der Strangverdampfertechnik liegt darin, dass eine effektive Entgasung nur durch stabile, das bedeutet im Apparat nicht abreißende, Stränge gewährleistet ist. Die Stabilität der Stränge wird durch die Viskosität der Polymerlösung beeinflusst. Eine zu niedrige Viskosität kann zu Strangabrissen führen. Das bedeutet eine Einschränkung der Betriebsparameter hinsichtlich Temperatur und Eintrittsgehalt an restflüchtigen Bestandteilen. Neben dem negativen Einfluss auf die Viskosität hat eine zu hohe Eintrittskonzentration an flüchtigen Bestandteilen direkt nachteilige Auswirkungen auf den erzielbaren Entgasungserfolg, da der Stoffaustausch rein durch Diffusion bestimmt ist. Die Oberfläche für den Stoffaustausch ist dagegen durch die Stranggeometrie festgelegt. Die erforderliche große Fläche des Schmelzeverteilers, der zum Erzeugen der Stränge erforderlich ist, erfordert zudem große, teure Apparate. Diese großen Apparate wiederum haben zwangsläufig große Flächen, die, vor allem im Austrag, mit geringen Strömungsgeschwindigkeiten durchströmt werden. Derartige geringe Strömungsgeschwindigkeiten führen zu langen Verweilzeiten des Polycarbonats in der Nähe der Wände und induzieren dort unerwünschte Veränderungen im Polycarbonat, wie Verfärbung und Bildung von Gel.

Es bestand daher die Aufgabe, eine Vorrichtung und ein Verfahren zum Entgasen von lösungsmittelhaltigen Polycarbonatlösungen bereitzustellen, bei dem die Bildung derartiger unerwünschter Veränderungen im Polycarbonat vermieden wird. Es war insbesondere Aufgabe der Erfindung die bestehende Vorrichtung zur Entgasung und das bestehende Entgasungsverfahren für Polycarbonatlösungen so zu verbessern, dass hohe Polycarbonatschmelzetemperaturen bei längeren Verweilzeiten vermieden und dennoch geringe Rest-Lösungsmittelgehalte im fertigen Polycarbonat erreicht werden.

Die Aufgabe wird überraschenderweise dadurch gelöst, eine Restentgasung mit Hilfe einer Apparate-Kombination aus Flashverdampfer und Ausdampfextruder durchgeführt wird. Polycarbonatlösungen, die aromatische Chlor-Kohlenwasserstoffe wie z.B. Chlorbenzol als Lösungsmittel enthalten, werden dieser Apparatekombination zugeführt; dabei wird der Flashverdampfer als erste Verfahrensstufe von der Polycarbonatlösung durchlaufen und der Ausdampfextruder als zweite nachgeschaltete Verfahrensstufe.

Der erfindungsgemäß verwendete Flashverdampfer ist auf einem Abscheider angeordnet und mit diesem unmittelbar verbunden. Die Öffnung oder Öffnungen des Flashverdampfers, die mit Polycarbonatlösung beaufschlagt sind, münden frei in diesen Abscheider, der seinerseits über den unteren Konus frei und unabsperrbar direkt mit einem Extrudergehäuse des Ausdampfextruders verbunden ist, sodass die aus dem Rohrbündelwärmetauscher austretende aufkonzentrierte Polycarbonatlösung unmittelbar in den Ausdampfextruder gelangen kann.

Gegenstand der Erfindung ist somit eine Vorrichtung und ein Herstellverfahren zur Entfernung flüchtiger Bestandteile aus lösungsmittelhaltigen Polymerschmelzen, insbesondere aus aromatische Chlorkohlenwasserstoffe enthaltenden Polycarbonatlösungn mit Hilfe einer Apparate-Kombination aus einem Flashverdampfer und einem Ausdampfextruder, wobei der Flashverdampfer auf einem Abscheider angeordnet und mit diesem unmittelbar verbunden ist, die Öffnung(en) des Flashverdampfers frei in diesen Abscheider münden, und dieser Abscheider über den unteren Konus frei und unabsperrbar direkt mit einem Extrudergehäuse des Ausdampfextruders verbunden ist und das Eintrittsorgan des Flashverdampfers in Form eines oder mehrerer im Wesentlichen waagrechte Rohre mit Öffnungen nach unten ausgeführt ist.

In einer besonders bevorzugten Ausführungsform wird diese Apparate-Kombination mit Bürdenleitungen ausgelegt, so dass die Abführung der im Flashverdampfer entstehenden lösungsmittelhaltigen Brüden direkt aus dem Gehäuse des Flashverdampfers über Abscheider und Kondensatoren erfolgt. Je nach Druck im Abscheider, erfolgt die Abführung der Bürden über eine Vakuumstation.

In einer weiteren Ausführungsform des erfindungsgemäßen Verfahrens ist eine Eindüsung und Vermischung von inerten Komponenten wie beispielsweise Stickstoff, Argon, Kohlendioxid, Wasser, Methan oder Helium oder eine Mischung aus einer oder mehrerer dieser Komponenten, bevorzugt Stickstoff als Schleppmittel in den Polymerschmelzestrom vor dem Flashverdampfer.

In einer weiteren besonders bevorzugten Ausführungsform des erfindungsgemäßen Verfahrens erfolgt die Eindüsung von Inertgas als Schleppmittel an einem oder mehreren Gehäusen des Ausdampfextruders.

Durch die dem Extruder vorgelagerte Eindampfung in dem Flashverdampfer kann die Drehzahl des Extruders gesenkt und so die Temperatur, und somit die Produktschädigung, verringert werden.

Der Flash-Verdampfer besteht bevorzugt aus einem Eintrittsorgan und einem Abscheider. Das Eintrittsorgan sorgt für den Produkteintritt in den Gasraum des Abscheiders, in dem sich die Polymerlösung von den abgetrennten flüchtigen Bestandteilen trennt, sowie einer Abführung für die entstehenden gasförmigen Brüden.

Das Eintrittsorgan kann auf verschiedene Weise ausgeführt sein, beispielsweise als Flashventil, als Verteilerplatte mit vorgeschaltetem Produktverteiler oder als ein oder mehrere im Wesentlichen waagrechte Rohre mit Öffnungen nach unten ausgeführt sein. Bevorzugt werden Verteilerplatten mit vorgeschaltetem Produktverteiler oder ein im Wesentlichen waagrechtes Rohr mit Öffnungen nach unten. "Im wesentlichen waagrecht" heißt, dass das Rohr der gegenüber der Waagrechten einen Winkel von max. 20°C, bevorzugt von max. 10° und besonders bevorzugt einen Winkel von 0° hat.

In einer bevorzugten Ausführungsform wird die erfindungsgemäße Vorrichtung zur Entgasung von Polycarbonatlösungen, bevorzugt aus dem Grenzflächenverfahren, enthaltend wenigstens ein organisches Lösungsmittel. Im Rahmen dieser Anmeldung sind die Begriffe Polycarbonatlösungen und Polycarbonatschmelzen als gleichwertig anzusehen.

Die 65- bis 75-Gew%-ige Polycarbonatlösung wird bevorzugt mit dem Pumpendruck aus der vorangehenden Aufkonzentrierungsstufe in dieses Rohr geleitet und entspannt sich an den Bohrungen unter Verdampfen des Lösungsmittels als aufkonzentrierte Polycarbonatlösung in das unmittelbar darunter liegende Gehäuse des Ausdampfextruders. Der Druck beim Eintritt in das Eintrittsorgan liegt bevorzugt im Bereich von 1,5 bis 15 bar und der Druck im Abscheider von 0,3 bis 6 bar.

In einer Ausführungsform kann dem Flash-Verdampfer noch ein Wärmeübertrager vorangeschaltet sein, um auf diese Weise eine ausreichende Verdampfungsenergie bereitzustellen. Die Polycarbonatlösungstemperaturen liegen bevorzugt im Bereich von 180°C bis 300°C, besonders bevorzugt von 200°C bis 250°C.

Auf diese Weise wird dem Ausdampfextruder eine höher konzentrierte und auch kältere Polycarbonatlösung zugeführt. Die Effizienz des Ausdampfextruders wird auf diese Weise gesteigert, da nur noch ein geringerer Energie-Eintrag für die verbleibende Restentgasung der konzentrierteren Polycarbonatlösung erforderlich ist, und da eine geringere Brüdenmenge über dessen Entgasungsöffnungen abgeführt werden muss. Diese Effizienzsteigerung im Ausdampfextruder ermöglicht eine Verringerung der Temperatur und der Verweilzeit der Polycarbonatlösung im Extruder und führt so zu einer schonenden Restentgasung des Polycarbonats im Sinne der Erfindung.

Die Öffnungen der bevorzugten Flashorgane Verteilerplatte und waagrechtes Rohr sind bevorzugt so angeordnet, dass sie über den Schneckenwellen liegen, so dass Polymerlösung, die aus den Bohrungen austritt, der Schwerkraft folgend im Wesentlichen auf die Schneckenwelle oder Schneckenwellen fällt und direkt eingezogen werden kann. Die Öffnungen können dabei erfindungsgemäß so gestaltet werden, dass vor den Öffnungen ein- oder zweiphasige Strömung herrscht. Für eine einphasige Strömung oberhalb der Öffnungen werden die Öffnungen bevorzugt so ausgeführt, dass sie bei Durchströmung einen Druckverlust haben, der mindestens dem Dampfdruck der Polycarbonatlösung im Eintritt entspricht. Aus den dem Fachmann bekannten Beziehungen zwischen Temperatur und Lösungsmittelkonzentration einer Polycarbonatlösung sowie dem Molekulargewicht sowie dem Dampfdruck und der Viskosität dieser Polymerlösung kann der Fachmann eine Auslegung finden, die die Einphasigkeit oberhalb der Düsenplatte garantiert. Wird eine Zweiphasigkeit angestrebt, so wird bevorzugt ein Druckhalteventil in die Leitung vor dem Rohr oder vor der Verteilerplatte verwendet.

Die Form der Öffnungen kann beispielsweise rund, oval oder schlitzförmig ausgeführt sein. Die kleinsten Abmessungen der Öffnungen senkrecht zur Flussrichtung der Öffnungen (Breite beim Schlitz, kleiner Halbmesser bei einer Ellipse, Durchmesser bei der kreisförmigen Öffnung) sind erfindungsgemäß zwischen 2 mm und 50 mm, bevorzugt zwischen 5 mm und 30 mm. Die Zahl der Bohrungen wird bevorzugt so gewählt, dass der Durchsatz pro Bohrung von 5 kg/h bis 100 kg/h, bevorzugt von 10 kg/h bis 50 kg/h und besonders bevorzugt von 20 kg/h bis 30 kg/h liegt. Die Anordnung der Bohrungen erfolgt bevorzugt in Reihen parallel zur Extruderachse, besonders bevorzugt in quadratischer Anordnung oder in einer Anordnung, in der die Mittelpunkte der Bohrungen den Eckpunkten eines gleichseitigen Dreiecks entsprechen.

Die Temperatur der Polymerlösung, die in den Flashverdampfer-Eintritt, liegt zwischen 180°C und 300°C und bevorzugt zwischen 200°C und 250°C. Der Absolutdruck im Abscheider des Flash-Verdampfers liegt zwischen 0,3 und 6 bar, bevorzugt zwischen 0,5 und 4 bar und besonders bevorzugt zwischen 1 und 2 bar.

In einer bevorzugten Ausführung wird die Polymerlösung vor Eintritt in den Flashverdampfer mittels eines oder mehrere Wärmeübetragers auf die Temperatur erwärmt, die es am Eintritt hat. Die Wärmeübertrager, die dafür in Frage kommen, sind dem Fachmann wohlbekannt. Beispielsweise können hierfür Glattrohrbündelwärmeübertrager, Rohrbündelwärmeübertrager, die bevorzugt mit eingebauten Statikmischem zur Verbesserung des Wärmeübergangs oder Plattenwärmeübertrager sein. Die Polymerlösung befindet sich dabei bevorzugt im Inneren der Rohre. Die Zahl der Passagen dieser Wärmeübertrager kann eins oder mehr betragen, bevorzugt wird eins. Bevorzugt sind Glattrohrbündelwärmeübertrager oder Rohrbündelwärmeübertrager, die mit Statikmischem zur Verbesserung des Wärmeübergags ausgerüstet sind. Die Beheizung der Wärmeübertrager kann, wie dem Fachmann bekannt ist, mit flüssigem oder kondensierendem Wärmeträger erfolgen. Für einen flüssigen Wärmeträger sind organische Wärmeträgeröle wie z.B. Marlotherm LH oder Marlotherm N bevorzugt. Ein kondensierender Wärmeübertrager ist bevorzugt kondensierender Wasserdampf oder kondensierendes Wärmeträgeröl wie z.B. Diphyl. Die Heiztemperatur der Wärmeübertrager sollte aus Qualitätsgründen nicht zu hoch gewählt werden; bevorzugt wird eine Differenz zwischen Heiz- und mittlerer kalorischer Austrittstemperatur von kleiner als 40 K, bevorzugt von kleiner als 30 K und besonders bevorzugt von kleiner als 20 K. Die Produktverweilzeit in dem Wärmeübertrager ist bevorzugt kleiner als zehn Minuten, bevorzugt kleiner als fünf Minuten und besonders bevorzugt kleiner als drei Minuten.

Der oder die Wärmeübertrager werden bevorzugt einphasig betrieben. Hierfür wird auf der Ausgangsseite des Wärmeübertragers bevorzugt ein Druckhalteventil installiert, was den Druck am Austritt für die Polymerlösung größer als der Dampfdruck des Polymers bei Heiztemperatur hält. Bevorzugt wird der Wärmeübertrager von unten nach oben durchströmt.

Der Abscheider verfügt in einer bevorzugten Ausführungsform im oberen Bereich über mindestens eine Austrittsöffnung zur Abführung gasförmiger Brüden, über mindestens ein Abscheidegefäß, auf dessen Boden sich vom Brüdenstrom mitgerissene Schmelzepartikel abscheiden können, und über eine Brüden-Kondensationseinrichtung. Hinter der Kondensationseinrichtung kann eine Anlage zur einer Vakuumerzeugung mit Druckregelung vorhanden sein.

Die Polycarbonat-Lösung enthält bevorzugt 65 - 95 Gew.% Polycarbonat, bezogen auf das Gesamtgewicht der Polycarbonat-Lösung.

Durch die in einer bevorzugten Ausführungsform zusätzliche Einführung von Schleppgasen vor dem Flash-Verdampfer und/oder im Ausdampfextruder wird der Grad der Restentgasung der Polycarbonatlösung auf schonende Weise weiter verbessert. Das besonders leichtflüchtige Dichlormethan wird auf diese Weise fast vollständig abgetrennt, bevor es in Kontakt mit den Wellen des Extruders kommt, wodurch der schädliche Einfluss des Dichlormethans auf die Farbe vermieden wird.

In einer speziellen Ausführungsform des erfindungsgemäßen Polycarbonatrestentgasüngsverfahrens wird der oben beschriebenen Kombination aus Flashverdampfer und Ausdampfextruder ein weiterer Flashverdampfer oder Fallrohrverdampfer vorangestellt, in den eine 55- bis 80 Gew-%-ige Polycarbonat-Lösung in einem ersten Verfahrensschritt eingeleitet und vorkonzentriert wird. Die so auf 70 bis 95 Gew.%, bevorzugt auf 80 bis 90 Gew.% Polycarbonat vorkonzentrierte Lösung wird anschließend dem oben beschriebenen zweiten Flashverdampfer, der unmittelbar mit dem Ausdampfextruder verbunden ist, zugeführt. Auf diese Weise gelingt es, die Zufuhr der zur Verdampfung der flüchtigen Bestandteile in der Polycarbonatlösung erforderliche Wärmemenge auf mehrere Apparate zu verteilen und die Apparate-Temperaturen so zu wählen, dass Überhitzungen der Polycarbonatlösung sowie die damit verbundenen Nebenreaktionen vermieden werden können.

Der Werkstoff für den Flashverdampfer soll gegenüber den Korrosionsangriffen durch Dichlormethan beständig sein und das Polycarbonat nicht schädigen. Bevorzugt wird ein eisenarmes oder eisenfreier Werkstoff eingesetzt. Bevorzugt sind nickelbasierte Werkstoffe mit Eisengehalten kleiner als 4 Gew.%, besonders bevorzugt die Legierungen mit den Werkstoffnummern (lt Stahlschlüssel 2007, Verlag Wegst GmbH): 2.4605 (NiCr23Mo16A1) und 2.4610 (Nimo16Cr16Ti). Die Polymerkonzentration am Eintritt in den Extruder beträgt zwischen 80 und 99 Gew.%, bevorzugt 90 bis 99 Gew.%.

Der Ausdampfextruder kann ein- oder mehrwellig ausgeführt sein, bevorzugt ein-, zwei- oder vierwellig, ganz besonders bevorzugt zweiwellig. Die Ausführung eines mehrwelligen Ausdampfextruders kann gleich- oder gegenläufig, dicht kämmend oder tangierend sein oder, im Fall von vier oder mehr Wellen, eine Kombination aus dicht kämmend und tangierend. Besonders bevorzugt wird die Ausführung als dicht kämmender, gleichläufiger Doppelschneckenextruder gestaltet.

In einer Ausführungsform können beispielsweise Schneckenelemente für mehrwellige Schneckenmaschinen mit paarweise gleichsinnigen und paarweise exakt abschabenden Schneckenwellen, mit zwei oder mehr Schneckengängen Z, mit *Achsabstand A* und *Außendurchmesser DE,* wobei die Summe der Kammwinkel eines Elementepaares größer als 0 und kleiner ist als

$$2\pi - 4\,Z\arccos\left(\frac{A}{DE}\right)$$ eingesetzt werden. Solche Schneckenelemente sind beispielsweise in der zum Anmeldezeitpunkt noch unveröffentlichten deutschen Offenlegungsschrift DE 10 2008 029305.9.

In einer weiteren Ausführungsform können beispielsweise auch Schneckenelemente mit paarweise gleichsinnigen und paarweise exakt abschabenden Schneckenwellen, wobei erzeugendes und erzeugtes Schneckenprofil eine Abfolge von Abdichtungsbereich - Übergangsbereich - Kanalbereich - Übergangsbereich aufweisen, wobei ein Abdichtungsbereich eine Abfolge von Kammbereich - Flankenbereich - Kammbereich ist, ein Kanalbereich eine Abfolge von Nutbereich - Flankenbereich - Nutbereich ist und ein Übergangsbereich eine Abfolge von Schneckenprofilbereichen ist, die mit einem Flankenbereich anfängt und mit einem Flankenbereich endet eingesetzt werden. Die Bereiche eines Schneckenprofils, die gleich dem Schneckenaußenradius sind, werden als Kammbereiche bezeichnet. Die Bereiche eines Schneckenprofils, die gleich dem Kernradius sind, werden als Nutbereiche bezeichnet. Die Bereiche eines Schneckenprofils, die kleiner als der Schneckenaußenradius und größer als der Kernradius sind, werden als Flankenbereiche bezeichnet. Solche Schneckenelemente sind beispielsweise in der zum Anmeldezeitpunkt noch unveröffentlichten deutschen Offenlegungsschrift DE 10 2008 029306.7. In einem "Kammbereich" haben die Schneckenelemente ihren größten Durchmesser und reinigen die Wand ab. In einem "Nutbereich" haben die Schneckenelemente ihren kleinsten Durchmesser. In einem "Übergangsbereich" haben die Schneckenelemente weder ihren größten noch ihren kleinsten Durchmesser.

Die Entgasungszonen können zwei- und dreigängig ausgeführt werden, bevorzugt zweigängig.

Eine hohe Entgasung lässt sich insbesondere erzielen, wenn gemäß einer weiteren besonders bevorzugten Ausführungsform der Extruder in Förderrichtung mehrere Entgasungszonen aufweist, an denen jeweils eine Absaugeinrichtung angeschlossen ist. Sehr gute Ergebnisse wurden mit einem Extruder erzielt, der hinter seiner Einzugsöffnung in Förderrichtung vier bis fünf Entgasungszonen aufweist, wobei an der der ersten Entgasungszone zugeordneten Entgasungsöffnung bevorzugt ein Absolutdruck im Bereich von 50 bis 150 kPa, an der der zweiten Entgasungszone zugeordneten Entgasungsöffnung bevorzugt ein Absolutdruck im Bereich von 0.3 bis 10 kPa, an der dritten und weiteren folgenden Entgasungszonen zugeordneten Entgasungsöffnung bevorzugt ein Absolutdruck im Bereich von 0.1 bis 3 kPa erzeugt wurde, wobei der Druck bevorzugt in jedem Schritt abnimmt. Jede der Entgasungszonen verfügt bevorzugt über einen Entgasungsdom, über den die entstehenden Brüden abgeführt werden. Zwischen den verschiedenen Entgasungszonen des Extruders sind Stauzonen angeordnet, bei denen durch neutrale oder rückfordernde Elemente Druckabfall erzeugt wird, wodurch der freie Querschnitt des Extruders vollständig gefüllt wird. Damit werden unterschiedliche Drücke im Gasraum der Entgasungszonen ermöglicht. Bevorzugt werden Knetelemente oder rückwärtsfördernde Schraubenelemente hierfür eingesetzt.

In einer bevorzugten Ausführungsform kann die Entgasung im Ausdampfextruder mit einem die Entgasungsoberfläche vergrößernden Schleppmittel positiv beeinflusst werden. Bei dem erfindungsgemäßen Verfahren wird das Schleppmittel vorzugsweise in Förderrichtung zwischen der vorletzten und letzten Entgasungszone zugemischt. Als Schleppmittel kann vorzugsweise Stickstoff verwendet werden. Das Schleppmittel wird in einer Knetzone dispergiert. Der zugeführte Schleppmittelvolumenstrom sollte bevorzugt bei einer Wellendrehzahl kleiner oder gleich 390 U/min vorzugsweise 0,05 bis 0,3 Massen-% betragen. Nach der Entgasungszone werden noch Additive und ggf. ein Strom an aufgeschmolzenem Polymer zugegeben, die in einer Druckaufbauzone mit dem Hauptstrom gemischt werden. Die Druckaufbau- und Mischzone kann ein-, zweioder dreigängig ausgeführt werden, bevorzugt werden zwei- oder dreigängige Ausführung und besonders bevorzugt wird eine dreigängige Ausführung. Die dreigängige Ausführung ist mit einer Reduzierung des Durchmessers verbunden, wenn der vorherige Entgasungsteil zweigängig ausgeführt wurde.

Die nach dem erfindungsgemäßen Verfahren erhältlichen thermoplastischen Polycarbonate haben einen Restgehalt an flüchtigen Substanzen (Lösungsmittel, insbesondere Monochlorbenzol) von maximal 2000 ppm, bevorzugt von 20 bis 1000 ppm und besonders bevorzugt von 50 bis 600 ppm, bezogen auf die Polymermasse. Der Restgehalt an Dichlormethan beträgt maximal 2 ppm, bevorzugt weniger als 1 ppm und besonders bevorzugt weniger als 0,5 ppm (frei von Dichlormethan).

Für das erfmdungsgemäße Verfahren geeignete Diphenole zur Herstellung von Polycarbonat sind im Stand der Technik vielfach beschrieben.

Geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxy-phenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenylethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Im Falle der Homopolycarbonate wird nur ein Diphenol eingesetzt, im Falle der Copolycarbonate werden mehrere Diphenole eingesetzt, wobei selbstverständlich die verwendeten Diphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die zur Regelung des Molekulargewichtes benötigten monofunktionellen Kettenabbrecher, wie beispielsweise Phenol oder Alkylphenole, insbesondere Phenol, p-tert. Butylphenol, iso-Octylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw., im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wo kein Phosgen mehr vorliegt, aber der Katalysator noch nicht dosiert wurde. Alternativ können sie auch vor dem Katalysator, mit dem Katalysator zusammen oder parallel zudosiert werden.

In der gleichen Weise werden ggf. Verzweiger oder Verzweigermischungen der Synthese zugesetzt. Üblicherweise werden Verzweiger jedoch vor den Kettenabbrechern zugesetzt. In der Regel werden Trisphenole, Quarterphenole oder Säurechloride von Tri- oder Tetracarbonsäuren oder Gemische der Polyphenole oder der Säurechloride verwendet. Einige der als Verzweiger geeignete Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl)-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die in der Phasengrenzflächensynthese von Polycarbonat bevorzugt verwendeten Katalysatoren sind tertiäre Amine, insbesondere Triethylamin, Tributylamin, Trioctylamin, N-Ethylpiperidin, N-Methylpiperidin, N-i/n-Propylpiperidin, quartäre Ammoniumsalze wie Tetrabutylammonium-, Tributylbenzylammonium-, Tetraethylammonium-hydroxid, -chlorid, -bromid, -hydrogensulfat, - tetrafluoroborat, sowie die den Ammoniumverbindungen entsprechenden Phosphoniumverbindungen. Diese Verbindungen sind als typische Phasengrenzflächenkatalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es werden eine Oniumverbindung oder ein Gemisch aus Oniumverbindungen als Katalysatoren verwendet. In diesem Fall ist eine Zugabe vor der Phosgendosierung bevorzugt. Die Dosierung des Katalysators oder der Katalysatoren kann in Substanz, in einem inerten Lösungsmittel, vorzugsweise dem Lösungsmittel der Polycarbonatsynthese oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt bei 0,001 bis 10 Mol-% bezogen auf Mole eingesetzte Bisphenole, bevorzugt 0,01 bis 8 Mol-%, besonders bevorzugt 0,05 bis 5 Mol-%.

Die Durchführung der Polycarbonatsynthese kann kontinuierlich oder diskontinuierlich geschehen. Die Reaktion kann daher in Rührkesseln, Rohrreaktoren, Umpumpreaktoren oder Rührkesselkaskaden oder Kombinationen daraus erfolgen. Dabei ist durch Verwendung der bereits erwähnten Mischorgane sicherzustellen, dass wässrige und organische Phase sich möglichst erst dann entmischen, wenn das Synthesegemisch ausreagiert hat, d.h. kein verseifbares Chlor von Phosgen oder Chlorkohlensäureestern mehr enthält.

Nach Eintrag des Phosgens kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachreaktionszeit kann nach jeder Dosierung von Vorteil sein. Diese Nachrührzeiten liegen bei 10 Sekunden bis 60 Minuten, bevorzugt 30 Sekunden bis 40 Minuten, besonders bevorzugt 1 bis 15 Minuten.

Die organische Phase kann aus einem Lösungsmittel oder Mischungen mehrerer Lösungsmittel bestehen. Geeignete Lösungsmittel sind chlorierte Kohlenwasserstoffe (aliphatische und/oder aromatische), bevorzugt Dichlormethan, Trichlorethylen, 1,1,1-Trichlorethan, 1,1,2- Trichlorethan und Chlorbenzol und deren Gemische. Es können jedoch auch aromatische Kohlenwasserstoffe wie Benzol, Toluol, m/p/o-Xylol oder aromatische Ether wie Anisol allein, im Gemisch mit oder zusätzlich zu chlorierten Kohlenwasserstoffen verwendet werden. Eine andere Ausführungsform der Synthese verwendet Lösungsmittel, welche Polycarbonat nicht lösen, sondern nur anquellen. Es können daher auch Nichtlösungsmittel für Polycarbonat in Kombination mit Lösungsmitteln verwendet werden. Dabei können als Lösungsmittel auch in der wässrigen Phase lösliche Lösungsmittel wie Tetrahydrofuran, 1,3/1,4-Dioxan oder 1,3-Dioxolan verwendet werden, wenn der Lösungsmittelpartner die zweite organische Phase bildet.

Das ausreagierte, höchstens noch Spuren (<2 ppm) an Chlorkohlensäureestern enthaltende mindestens zweiphasige Reaktionsgemisch lässt man zur Phasentrennung absitzen. Die wässrige alkalische Phase wird evtl. ganz oder teilweise zurück in die Polycarbonatsynthese als wässrige Phase geleitet oder aber der Abwasseraufarbeitung zugeführt, wo Lösungsmittel- und Katalysatoranteile abgetrennt und rückgeführt werden. In einer anderen Variante der Aufarbeitung wird nach Abtrennung der organischen Verunreinigungen, insbesondere von Lösungsmitteln und Polymerresten, und gegebenenfalls nach der Einstellung eines bestimmten pH-Wertes, z.B. durch Natronlaugezugabe, das Salz abgetrennt, welches z.B. der Chloralkalielektrolyse zugeführt werden kann, während die wässrige Phase gegebenenfalls wieder der Synthese zugeführt wird.

Die organische, das Polycarbonat enthaltende Phase kann nun von allen Kontaminationen alkalischer, ionischer oder katalytischer Art gereinigt werden. Die organische Phase enthält auch nach einem oder mehreren Absetzvorgängen noch Anteile der wässrigen alkalischen Phase in feinen Tröpfchen sowie den Katalysator, in der Regel ein tert. Amin. Die Absetzvorgänge können gegebenenfalls dadurch unterstützt werden, dass die organische Phase Absetzkessel, Rührkessel, Coalescer oder Separatoren bzw. Kombinationen daraus durchläuft, wobei gegebenenfalls Wasser in jedem oder einigen Trennschritten unter Umständen unter Verwendung von aktiven oder passiven Mischorganen zudosiert werden kann.

Nach dieser groben Abtrennung der alkalischen, wässrigen Phase wird die organische Phase ein oder mehrmals mit verdünnten Säuren, Mineral-, Carbon- Hydroxycarbon-und/oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew.-%, bevorzugt 0,01 bis 5 Gew.-% liegen.

Weiterhin wird die organische Phase mit entsalztem oder destilliertem Wasser wiederholt gewaschen. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen daraus, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können ggf. Säuren, vorzugsweise gelöst im Lösungsmittel, welches der Polymerlösung zugrunde liegt, zugegeben werden. Bevorzugt werden hier Chlorwasserstoffgas und Phosphorsäure oder phosphorige Säure verwendet, die ggf. auch als Mischungen eingesetzt werden können.

Diese gereinigte Lösung wird dann im folgenden Schritt der erfindungsgemäßen Flash-Verdampfer/Ausdampf-Extruder Kombination zugeführt.

Die nach dem erfmdungsgemäßen Verfahren erhaltenen Polycarbonate können zur Veränderung von Eigenschaften mit den üblichen Additiven und Zusatzstoffen (z.B. Hilfs- und Verstärkungsstoffe) versehen werden. Der Zusatz von Additiven und Zuschlagstoffen dient der Verlängerung der Nutzungsdauer (z.B. Hydrolyse- oder Abbaustabilisatoren), der Verbesserung der Farbstabilität (z.B. Thermo- und UV-Stabilisatoren), der Vereinfachung der Verarbeitung (z.B. Entformer, Fließhilfsmittel), der Verbesserung der Gebrauchseigenschaften (z.B. Antistatika), der Verbesserung des Flammschutzes, der Beeinflussung des optischen Eindrucks (z.B. organische Farbmittel, Pigmente) oder der Anpassung der Polymereigenschaften an bestimmte Belastungen (Schlagzähmodifikatoren, fein zerteilte Mineralien, Faserstoffe, Quarzmehl, Glas- und Kohlenstoffiasem).

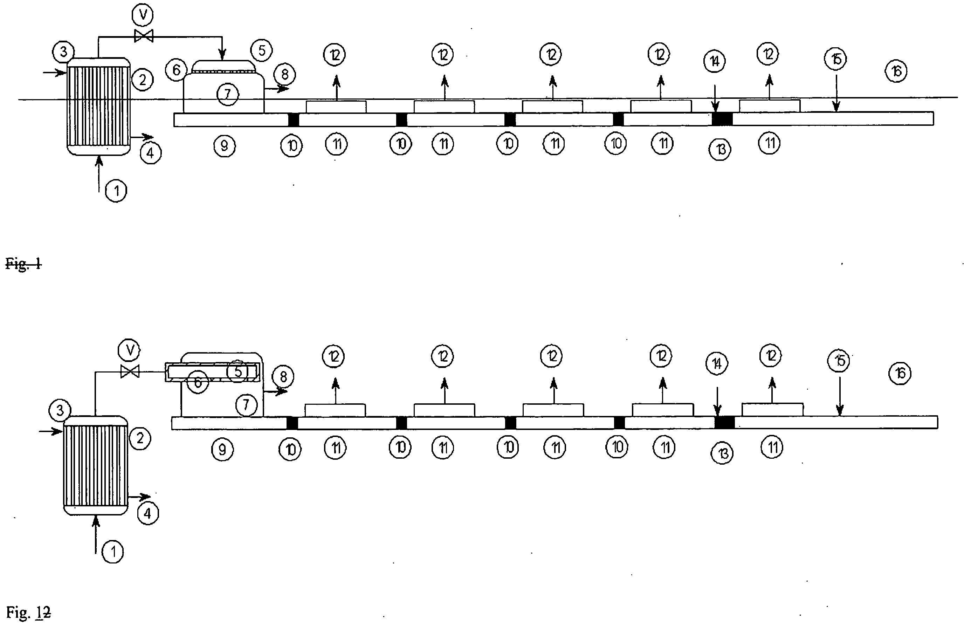

In Fig. 1 wird die Polymerlösung durch eine Zuführung 1 dem Rohrbündelwärmeübertrager 2 zugeführt. Der Rohrbündelwärmeübertrager wird mit Heizmedium beheizt, das bei 3 zu- und bei 4 abgeführt wird. Der Druck im Wärmeübertrager 2 wird mit dem Ventil V über dem Dampfdruck der Lösung bei Heiztemperatur gehalten. Danach entspannt die Polymerlösung über das Einsteckrohr 5 und die Öffnungen 6 in den Abscheidebehälter 7, der direkt über dem Extruder angeordnet ist. Das freigesetzte Gas wird über die Brüdenleitung 8 abgeführt. Das Produkt fällt direkt in die Einzugszone 9 des Extruders und wird durch eine Stauzone 10 einer ersten Entgasungszone 11 zugeführt, die über einen Entgasungsdom 12 verfügt. Danach folgen weitere Stauzonen 10 und Entgasungszonen 11. Vor dem letzten Entgasungsdom wird in der Knetzone 12 über die Zugabestelle 13 Stickstoff über die Zufuhr 14 zugegeben. Bei der Zugabestelle 15 werden noch Additive und ggf. aufgeschmolzenes Polymer zugegeben, die in der Druckaufbau- und Mischzone 16 mit dem Polymerstrom vermischt werden.

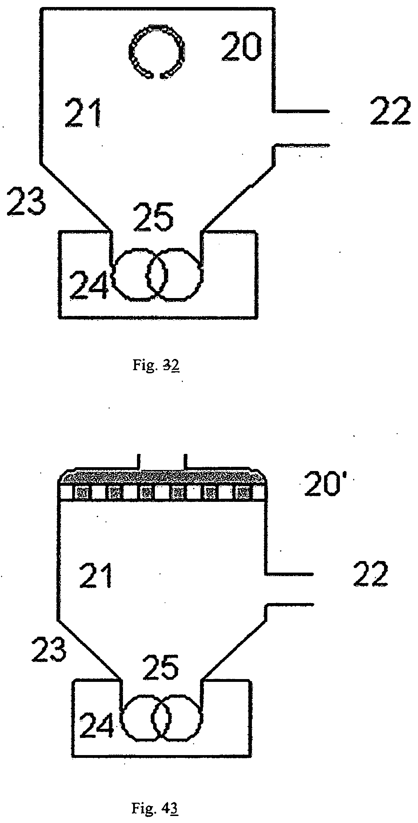

Fig. 2 und 3 zeigen eine Sicht des Flashverdampfers mit Abscheidebehälters und darunter liegenden Extruderwellen in Richtung parallel zu den Achsen des Extruders. Die Polycarbonatlösung wird von oben durch das Flashrohr 20 oder 20' in den Abscheider 16 gegeben. Die Brüden werden im Abscheider 21 von der konzentrierten Polymerlösung getrennt. Die Brüden werden durch die Brüdenleitung 22 der Kondensation zugeführt. Die konzentierte Polymerlösung trifft überwiegend auf direkt auf die Extruderwellen 25 und zum kleineren auf den Konus 23, von wo sie unter Wirkung der Schwerkraft den Extruderwellen zufließt. Die Extruderwellen sind im nach oben geöffenten Extrudergehäuse 24 angeordnet.

Die folgenden Beispiele dienen der exemplarischen Erläuterung der Erfindung und sind nicht als Beschränkung aufzufassen.

## Beispiele

Der Yellowness Index YI wurde nach ASTM E 313 an spritzgegossenen Proben einer Dicke von 4 mm bestimmt. Die Verspritzungstemperatur war 300°C.

Die relative Viskosität ist das Verhältnis der Viskosität einer Lösung von 0,5 g Polycarbonat in 100 ml Dichlormethan zur Viskosität des reinen Lösemittels bei 25°C.

## Bespiel

6,5 t/h Polycarbonat wurden in einer erfindungsgemäßen Vorrichtung aus einer Lösung von 65 Gew-% Polycarbonat, 33,5 Gew-% Chlorbenzol und 1,5 Gew-% Methylenchlorid isoliert. Der verwendete Ausdampfextruder war als dicht kämmender, gleichsinnig drehender Doppelschneckenextruder ausgeführt und hatte einen Schneckendurchmesser von 178 mm, ein Verhältnis von Länge des Extruders zum Durchmesser von 48 und war in der Einzugszone und den Entgasungszonen zweigängig ausgeführt. Der Flashverdampfer bestand aus einem Rohr mit 150 mm Durchmesser, das unten geschlitzt war. Die Eintrittstemperatur in den Flashverdampfer betrug 230°C. In einer Schleppmittelzone wurden 13 kg/h Stickstoff zugeführt. Das isolierte Polycarbonat hatte eine relative Viskosität von 1,295.

Der Chlorbenzol-Restgehalt im isolierten Polycarbonat betrug 330 ppm und der Gehalt an Dichlormethan war unterhalb der Nachweisgrenze von 0,5 ppm. Die maximale Temperatur, an der Düse des Extruders, betrug 391°C. DerYellowness-Index des Polycarbonats betrug 1,7.

**Vergleichsbeispiel**

6,5 t/h Polycarbonat wurden in einem Extruder mit Rückwärtsentgasung aus einer Lösung von 65 Gew-% Polycarbonat, 33,5 Gew-% Chlorbenzol und 1,5 Gew-% Methylenchlorid isoliert. Der verwendete Ausdampfextruder war analog dem erfindungsgemäßen Beispiel als dicht kämmender, gleichsinnig drehender Doppelschneckenextruder ausgeführt und hatte einen Schneckendurchmesser von 178 mm, ein Verhältnis von Länge des Extruders zum Durchmesser 48 und war in der Einzugszone und den Entgasungszonen zweigängig ausgeführt. In einer Schleppmittelzone wurden, ebenso wie im erfindungsgemäßen Beispiel, 13 kg/h Stickstoff zugeführt. Die Temperatur der Polymerlösung von der Rückwärtsentgasung betrug 185°C. Der Eintritt in den Extruder erfolgte über ein Ventil. Das isolierte Polycarbonat hatte eine relative Viskosität von 1,295.

Der Chlorbenzol-Restgehalt im isolierten Polycarbonat betrug 410 ppm und der Gehalt an Dichlormethan betrug 0,5 ppm. Die Temperatur an der Düse des Extruders betrug 409°C. Der Yellowness-Index des Polycarbonats betrug 2,3.

**Patentansprüche**

1. Vorrichtung zum Entgasen von lösungsmittelhaltigen Polycarbonatschmelzen, **dadurch gekennzeichnet, dass** ein Flashverdampfer mit einem Ausdampf-Extruder kombiniert wird, wobei der Flashverdampfer auf einem Abscheider angeordnet und mit diesem unmittelbar verbunden ist, die Öffnung(en) des Flashverdampfers frei in diesen Abscheider münden, und dieser Abscheider über den unteren Konus frei und unabsperrbar direkt mit einem Extrudergehäuse des Ausdampfextruders verbunden ist und das Eintrittsorgan des Flashverdampfers in Form eines oder mehrerer im Wesentlichen waagrechte Rohre mit Öffnungen nach unten ausgeführt ist.

2. Vorrichtung nach Anspruch 1, **dadurch gekennzeichnet, dass** am Flashverdampfer Brüdenleitungen angebracht sind, wobei die Abführung der im Flashverdampfer entstehenden lösungsmittelhaltigen Brüden direkt aus dem Gehäuse des Flashverdampfers über Abscheider und Kondensatoren erfolgt.

3. Vorrichtung nach Anspruch 1 oder 2, **dadurch gekennzeichnet, dass** die Beheizung des Flashverdampfers über kondensierenden Wasserdampf, über einen kondensierenden organischen Wärmeträger oder über einen flüssigen organischen Wärmeträger erfolgt.

4. Vorrichtung nach einem der Ansprüche 1 bis 3, **dadurch gekennzeichnet, dass** der Kombination aus einem Flashverdampfer und Ausdampfextruder wenigstens ein weiterer Flashverdampfer/Fallrohrverdampfer vorangestellt ist.

5. Vorrichtung nach einem der Ansprüche 1 bis 4, **dadurch gekennzeichnet, dass** der Ausdampfextruder zwei- oder vierwellig ausgeführt ist.

6. Vorrichtung nach einem der Ansprüche 1 bis 5, **dadurch gekennzeichnet, dass** der Ausdampfextruder ein dicht kämmender, gleichsinnig drehender Doppelschneckenextruder ist.

7. Vorrichtung nach einem der Ansprüche 1 bis 6, **dadurch gekennzeichnet, dass** der Extruder in Förderrichtung mehrere Entgasungszonen aufweist.

8. Verfahren zur Entgasung von Polycarbonatlösungen in einer Vorrichtung nach einem der Ansprüche 1 bis 7, **dadurch gekennzeichnet, dass** eine Polycarbonatlösung, enthaltend wenigstens ein organisches Lösemittel und wenigstens ein Polycarbonat, nach dem Grenzflächenverfahren hergestellt wird und diese Polycarbonat-Lösung in einem zweiten Schritt einem Flashverdampfer in Kombination mit einem Ausdampf-Extruder zugeführt wird, wobei der Flashverdampfer direkt über dem Extruder so angeordnet ist, so dass die Polymerlösung direkt in den Ausdampf-Extruder fällt.

9. Verfahren nach Anspruch 8, **dadurch gekennzeichnet, dass** die Abführung der im Flashverdampfer entstehenden lösungsmittelhaltigen Brüden direkt aus dem Gehäuse des Flashverdampfers über Brüdenleitungen erfolgt.

10. Verfahren nach einem der Ansprüche 8 oder 9, **da-**

**durch gekennzeichnet, dass** eine Eindüsung und Vermischung von Inertgasen als Schleppmittel in den Polymerschmelzestrom vor dem Flashverdampfer erfolgt.

11. Verfahren nach einem der Ansprüche 8 bis 10, **dadurch gekennzeichnet, dass** eine Eindüsung von Inertgas als Schleppmittel an einem oder mehreren Gehäusen des Ausdampfextruders erfolgt.

12. Verfahren nach einem der Ansprüche 8 bis 11, **dadurch gekennzeichnet, dass** die Eingangskonzentration des Polycarbonats in den Flashverdampfer zwischen 60 Gew-% und 95 Gew-% beträgt:

13. Verfahren nach einem der Ansprüche 8 bis 12, **dadurch gekennzeichnet, dass** das Polymer vor dem Eintreten in den Flashverdampfer mittels eines Wärmeübertragers aufgewärmt wird.


**Claims**

1. Apparatus for devolatilizing solvent-containing polycarbonate melts, **characterized in that** a flash devolatilizer is combined with a vented extruder, said flash devolatilizer being arranged atop a separator and connected directly thereto, the orifice (s) of the flash devolatilizer open in an unrestricted manner into this separator, and this separator is connected in an unrestricted and unblockable manner via the lower cone directly to an extruder housing of the vented extruder, and the inlet element of the flash devolatilizer is designed in the form of one or more essentially horizontal pipes with orifices at the bottom.

2. Apparatus according to Claim 1, **characterized in that** there are vapor lines mounted on the flash devolatilizer, and the solvent-containing vapors formed in the flash devolatilizer are removed directly from the housing of the flash devolatilizer via separators and condensers.

3. Apparatus according to Claim 1 or 2, **characterized in that** the flash devolatilizer is heated by means of condensing steam, by means of a condensing organic heat carrier or by means of a liquid organic heat carrier.

4. Apparatus according to any of Claims 1 to 3, **characterized in that** the combination of a flash devolatilizer and vented extruder is upstream of at least one further flash devolatilizer/downpipe devolatilizer.

5. Apparatus according to any of Claims 1 to 4, **characterized in that** the vented extruder is of two- or four-shaft design.

6. Apparatus according to any of Claims 1 to 5, **characterized in that** the vented extruder is a closely intermeshing, corotatory twin-screw extruder.

7. Apparatus according to any of Claims 1 to 6, **characterized in that** the extruder has several devolatilizing zones in conveying direction.

8. Process for devolatilizing polycarbonate solutions in an apparatus according to any of Claims 1 to 7, **characterized in that** a polycarbonate solution comprising at least one organic solvent and at least one polycarbonate is prepared by the interfacial process and, in a second step, this polycarbonate solution is supplied to a flash devolatilizer in combination with a vented extruder, said flash devolatilizer being arranged directly above the extruder such that the polymer solution falls directly into the vented extruder.

9. Process according to Claim 8, **characterized in that** the solvent-containing vapors formed in the flash devolatilizer are removed directly from the housing of the flash devolatilizer by means of vapor lines.

10. Process according to either of Claims 8 and 9, **characterized in that** inert gases as entraining agents are injected into and mixed into the polymer melt stream upstream of the flash devolatilizer.

11. Process according to any of Claims 8 to 10, **characterized in that** inert gas is injected as entraining agent in one or more housings of the vented extruder.

12. Process according to any of Claims 8 to 11, **characterized in that** the input concentration of the polycarbonate into the flash devolatilizer is between 60% by weight and 95% by weight.

13. Process according to any of Claims 8 to 12, **characterized in that** the polymer is heated by means of a heat exchanger before entering the flash devolatilizer.


**Revendications**

1. Dispositif pour dégazer des masses fondues de polycarbonate contenant des solvants, **caractérisé en ce qu'**un évaporateur éclair est combiné à une extrudeuse à évaporation, l'évaporateur éclair étant disposé sur un séparateur et étant directement relié à ce dernier, la ou les ouvertures de l'évaporateur éclair débouchant librement dans ce séparateur, et ce séparateur étant relié, par l'intermédiaire du cône inférieur, librement et sans possibilité de sectionnement, directement à une enveloppe d'extrudeuse de l'extrudeuse à évaporation, et l'organe d'entrée de l'évaporateur éclair étant réalisé sous forme d'un ou plusieurs tubes essentiellement horizontaux, comportant des ouvertures vers le bas.

2. Dispositif selon la revendication 1, **caractérisé en ce que** des conduites de fumées sont rapportées à l'évaporateur éclair, l'évacuation des fumées contenant des solvants, se formant dans l'évaporateur éclair, s'effectuant directement à partir de l'enveloppe de l'évaporateur éclair, en passant par le séparateur et des condenseurs.

3. Dispositif selon la revendication 1 ou 2, **caractérisé en ce que** le chauffage de l'évaporateur éclair est réalisé grâce à de la vapeur d'eau condensée, grâce à un caloporteur organique assurant une condensation, ou à un caloporteur organique liquide.

4. Dispositif selon l'une des revendications 1 à 3, **caractérisé en ce que** la combinaison d'un évaporateur éclair et d'une extrudeuse à évaporation est précédée d'au moins un autre évaporateur éclair/évaporateur à tube tombant.

5. Dispositif selon l'une des revendications 1 à 4, **caractérisé en ce que** l'extrudeuse à évaporation est conçue avec deux ou quatre arbres.

6. Dispositif selon l'une des revendications 1 à 5, **caractérisé en ce que** l'extrudeuse à évaporation est une extrudeuse à double vis, tournant dans le même sens, avec entrecroisement dense.

7. Dispositif selon l'une des revendications 1 à 6, **caractérisé en ce que** l'extrudeuse présente, dans la direction d'avance, plusieurs zones de dégazage.

8. Procédé de dégazage de solutions de polycarbonate dans un dispositif selon l'une des revendications 1 à 7, **caractérisé en ce qu'**une solution de polycarbonate, contenant au moins un solvant organique et au moins un polycarbonate, est préparée par le procédé interfacial, et cette solution de polycarbonate est, dans une deuxième étape, envoyée à un évaporateur éclair en combinaison avec une extrudeuse à évaporation, l'évaporateur éclair étant disposé directement au-dessus de l'extrudeuse de telle sorte que la solution de polymères tombe directement dans l'extrudeuse à évaporation.

9. Procédé selon la revendication 8, **caractérisé en ce que** l'évacuation des fumées contenant des solvants, qui se forment dans l'évaporateur éclair, a lieu directement à partir de l'enveloppe de l'évaporateur éclair, en passant par des conduites de fumées.

10. Procédé selon l'une des revendications 8 ou 9, **caractérisé en ce qu'**une injection et un mélange de gaz inertes servant d'agents d'entraînement dans le courant de masse fondue de polymères ont lieu en amont de l'évaporateur éclair.

11. Procédé selon l'une des revendications 8 à 10, **caractérisé en ce qu'**une injection d'un gaz inerte en tant qu'agent d'entraînement a lieu contre une ou plusieurs enveloppes de l'extrudeuse à évaporation.

12. Procédé selon l'une des revendications 8 à 11, **caractérisé en ce que** la concentration d'entrée du polycarbonate dans l'évaporateur éclair est comprise entre 60 et 95 %.

13. Procédé selon l'une des revendications 8 à 12, **caractérisé en ce que** le polymère est, avant de pénétrer dans l'évaporateur éclair, chauffé à l'aide d'un caloporteur.

Fig. 1

Fig. 12

Fig. 3̶2

Fig. 4̶3

**EP 2 435 151 B1**

**IN DER BESCHREIBUNG AUFGEFÜHRTE DOKUMENTE**

**In der Beschreibung aufgeführte Patentdokumente**

- EP 1265944 A
- EP 113848 A1
- DE 2908352
- EP 1165302 A
- EP 027700 A
- JP 05017516 B
- EP 1510530 A
- EP 1113848 B1
- DE 102008029305
- DE 102008029306

**In der Beschreibung aufgeführte Nicht-Patentliteratur**

- Chemistry and Physics of Polycarbonates. Polymer Reviews. Interscience Publishers, 1964, vol. 9, 33-70
- Der gleichläufige Doppelschneckenextruder. Klemens Kohlgrüber. Carl Hanser Verlag, 193-195

15